# EUROPEAN PATENT APPLICATION

(11) **EP 3 975 581 A1**
(43) Date of publication of application: **30.03.2022**
(21) Application number: 20839656.4
(22) Date of filing: 14.07.2020
(51) Int. Cl.: H04Q 11/00, H04N 7/22, H04N 21/41, H04N 21/426

(54) **SYSTEM ON CHIP ACHIEVING INTEGRATION BETWEEN OPTICAL NETWORK UNIT AND SET-TOP BOX**

(30) Priority: 15.07.2019 CN 201910637202
(71) Applicant: ZTE Corporation, Shenzhen, Guangdong 518057 (CN)
(72) Inventor: WANG, Lei, Shenzhen, Guangdong 518057 (CN); XIA, Gang, Shenzhen, Guangdong 518057 (CN); ZHOU, Wei, Shenzhen, Guangdong 518057 (CN)
(74) Representative: Canzler & Bergmeier Patentanwälte Partnerschaft mbB
(86) International application number: PCT/CN2020/101934
(87) International publication number: WO 2021/008530

(57) **Abstract**

Disclosed is a system on chip achieving integration between an optical network unit and a set-top box. The system on chip comprises a passive optical network (PON) media access control module, a packet processing module, and an application processing module. The PON media access control module receives a PON data frame, converts the PON data frame into an Ethernet data frame, and sends the Ethernet data frame to the packet processing module. The packet processing module performs routing processing on the received Ethernet data frame, and sends, according to identifier information carried in the processed Ethernet data frame, a local message to the application processing module, wherein the local message comprises an optical network unit (ONU) service message or a set-top box service message. The application processing module performs, according to a type of the local message, corresponding processing.

## Description

The present application claims priority to the Chinese Patent Application No. 201910637202.X filed on July 15, 2019, the entire contents of which are incorporated herein by reference.

### TECHNICAL FIELD

The present application relates to the field of technologies of optical networks and set-top boxes, and in particular, to a System on Chip (SoC) for achieving integration of an Optical Network Unit (ONU) and a Set-Top Box (STB).

### BACKGROUND

An Optical Network Unit (ONU) is a terminal device, responsible for an access of optical fiber and commonly called an optical modem, in a Passive Optical Network (PON), and is generally placed in a user's home to provide an access service of broadband data for the user. Functions of an ONU device include an optical access function, a data forwarding function, a service control function and the like, and are usually completed in one integrated system chip (i.e., System on Chip, SoC).

A Set-Top Box (STB) is a device that provides multimedia services in a form of Internet Protocol Television (IPTV) or Over The Top (OTT). Functions of the STB include audio-video decoding, audio-video output, application processing function and the like, and are usually completed in one integrated system chip (i.e., SoC).

For some places with tiny space, such as hotels, classrooms, small businesses and the like, many operators expect deploying a device integrating the ONU and the STB, which is called as an integration type ONU gateway or an integration type STB. However, the integration type device (integration type ONU gateway or integration type STB) is only a board-level integration, for example, two SoCs are designed on one Printed Circuit Board (PCB), or even two PCBs are simply spliced to form a formally integrated device. The integration type device uses two independent SoCs to implement the respective functions of the ONU and the STB, and thus the integration type device has relatively high power consumption and cost.

### SUMMARY

The present application provides a System on Chip (SoC) for achieving integration of an Optical Network Unit (ONU) and a Set-Top Box (STB), which can achieve integration of functions of the ONU and the STB by adopting one SoC and has reduced volume, cost and power consumption with respect to the integration type device.

An embodiment of the present application provides a System on Chip (SoC) for achieving integration of an ONU and a STB, including: a Passive Optical Network (PON) Media Access Control (MAC) module, a Packet Processor (PP) module, and an Application Processor (AP) module;
the PON MAC module is configured to receive a PON data frame, convert the PON data frame into an Ethernet data frame, and send the Ethernet data frame to the PP module;
the PP module is configured to perform routing processing on the received Ethernet data frame, and send a local packet to the AP module according to identification information carried in the processed Ethernet data frame; the local packet includes an ONU service packet or a STB service packet; and
the AP module is configured to perform corresponding processing according to a type of the local packet.

### DESCRIPTION OF DRAWINGS

Fig. 1 is a structural diagram of a SoC for achieving integration of an ONU and a STB according to an embodiment of the present application;
Fig. 2 is a structural diagram of a SoC for achieving integration of an ONU and a STB according to an embodiment of the present application;
Fig. 3 is a structural diagram of a SoC for achieving integration of an ONU and a STB according to an embodiment of the present application;
Fig. 4 is a structural diagram of a media co-processing module according to an embodiment of the present application;
Fig. 5 is a structural diagram of an audio-video output module according to an embodiment of the present application;
Fig. 6 is a structural diagram of a SoC for achieving integration of an ONU and a STB according to Example 1 of the present application; and
Fig. 7 is a schematic structural diagram of a SoC using one set of memory and Flash according to Example 1 of the present application.

### DESCRIPTION OF EMBODIMENTS

The embodiments of the present application are further described with reference to the accompanying drawings.

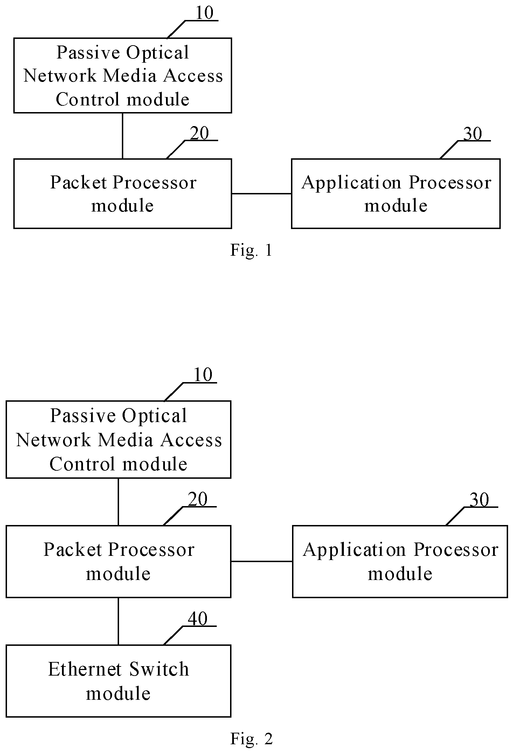

As shown in Fig. 1, an embodiment of the present application provides a System on Chip (SoC) for achieving integration of an ONU and a STB, including:
a PON MAC module 10 configured to receive a PON data frame, convert the PON data frame into an Ethernet data frame, and send the Ethernet data frame to a PP module 20;
the PP module 20 configured to perform routing processing on the received Ethernet data frame, and send a local packet to an AP module 30 according to identification information carried in the processed Ethernet data frame; the local packet includes an ONU service packet or a STB service packet; and
the AP module 30 configured to perform corresponding processing according to a type of the local packet.

In the embodiment, the PON data frame is an electrical signal generated by a PON optical module through receiving an optical signal from a PON via an uplink port and performing photoelectric conversion, the electrical signal is sent to the PON MAC module 10 through a downlink port.

In some implementations, the PON MAC module 10 is further configured to convert an Ethernet data frame sent by the PP module 20 into a PON data frame, and send the PON data frame to a PON through a PON optical module; that is, the PON optical module may further receive an electrical signal through a downlink port and perform photoelectric conversion to generate an optical signal, and send the optical signal to the PON through an uplink port.

In some implementations, the PP module 20 is configured to send the local packet to the AP module 30 according to the identification information carried in the Ethernet data frame by adopting a following way:
in response to that a destination MAC address carried by the Ethernet data frame corresponds to a MAC address of the SoC, determining that the Ethernet data frame is the local packet; the SoC is configured with one MAC address; and
distinguishing the ONU service packet and the STB service packet according to information of a protocol type carried by the Ethernet data frame.

The protocol type corresponding to the STB service packet includes a Real Time Streaming Protocol (RSTP).

In some implementations, the PP module 20 is configured to send the local packet to the AP module 30 according to the identification information carried in the Ethernet data frame by adopting a following way:
in response to that a destination MAC address carried by the Ethernet data frame corresponds to a MAC address of the SoC, determining that the Ethernet data frame is the local packet; distinguishing the ONU service packet and the STB service packet according to information of the destination MAC address carried by the Ethernet data frame; and the SoC is configured with two MAC addresses, one of the two MAC addresses corresponds to the ONU service packet, and the other of the two MAC addresses corresponds to the STB service packet.

In some implementations, the PP module 20 is configured to send the local packet to the AP module 30 according to the identification information carried in the Ethernet data frame by adopting a following way:
sending the ONU service packet and the STB service packet to different packet queues, respectively, and each packet queue is processed by at least one processing unit of the AP module 30.

In some implementations, the AP module 30 includes a plurality of processing cores, one of the processing cores is configured to process the ONU service packet, and other one or more of the processing cores are configured to process the STB service packet.

In some implementations, the different packet queues have different processing priorities, the processing priority of the ONU service packet is higher than the processing priority of the STB service packet.

The packet queue corresponding to the ONU service packet generates a first interrupt signal, the packet queue corresponding to the STB service packet generates a second interrupt signal, and an interrupt priority of the first interrupt signal is higher than an interrupt priority of the second interrupt signal.

The processor (i.e., multi-core processor) with the plurality of processing cores being adopted can achieve parallel processing of services, and each processing core can be controlled independently without mutual influence among different processing cores. Since the STB service may be closed during standby, the STB service may be deployed on any other core except for the core 0 in the multi-core processor, and the other core except for the core 0 can be closed during standby to save power consumption.

In some implementations, the AP module 30 is further configured to send an Ethernet data frame to the PP module 20.

The PP module 20 is further configured to send the Ethernet data frame received from the AP module 30 to the PON MAC module 10.

The PON MAC module 10 is further configured to convert the Ethernet data frame sent by the PP module 20 into a PON data frame, and send the PON data frame to the PON.

In some implementations, as shown in Fig. 2, the SoC further includes an Ethernet switch module 40.

The PP module 20 is further configured to send a transparently transmitted packet to the Ethernet switch module 40 according to the identification information carried in the Ethernet data frame.

The Ethernet switch module 40 is configured to, after receiving the transparently transmitted packet, perform switching processing on the transparently transmitted packet and send the transparently transmitted packet to a connected device through an Ethernet port.

The transparently transmitted packet is a packet whose destination MAC address is a MAC address of the connected device.

In some implementations, the Ethernet switch module 40 is further configured to send an Ethernet data frame received from the connected device of the Ethernet port to the PP module 20.

The PP module 20 is further configured to send the Ethernet data frame received from the Ethernet switch module 40 to the PON MAC module 10.

The PON MAC module 10 is further configured to convert the Ethernet data frame sent by the PP module 20 into a PON data frame, and send the PON data frame to the PON.

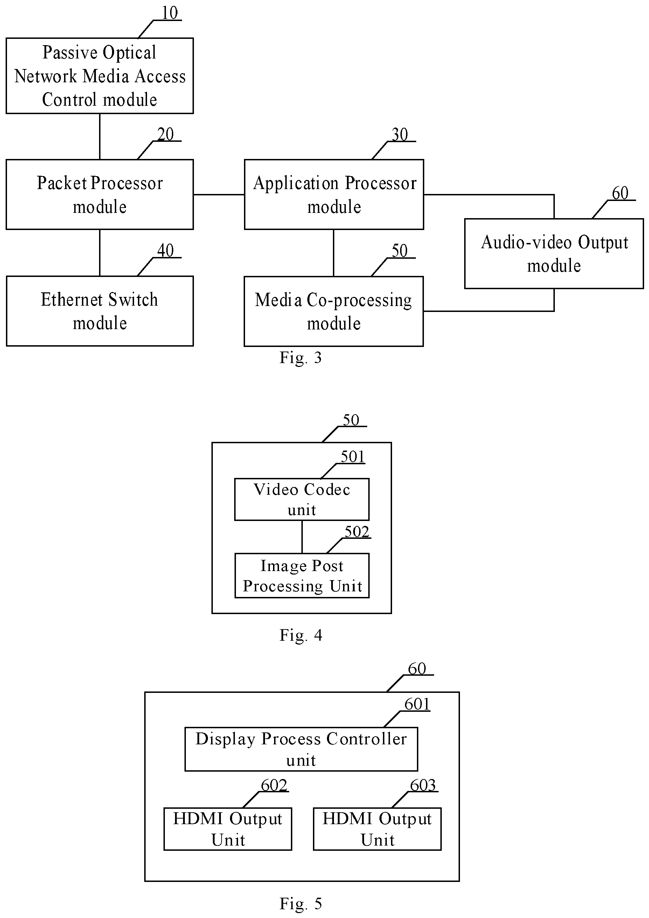

In some implementations, as shown in Fig. 3, the SoC further includes a media co-processing module 50 and an audio-video output module 60.

The media co-processing module 50 is configured to perform processing on image data of the STB service.

The audio-video output module 60 is configured to output an audio frame data and an image frame data generated by the STB service to a corresponding media output interface.

In some implementations, the multi-core processor may be an Advanced Reduced Instruction Set Computing Machine (ARM) Coretex-A53 quad-core processor. The ONU service packet may be processed by a core 0 of the ARM Coretex-A53 quad-core processor, and the STB service packet may be processed by one or more of a core 1, a core 2, and a core 3 of the ARM Coretex-A53 quad-core processor.

In some implementations, the PP module 20 may adopt a Network Processor (NP) or an Application Specific Integrated Circuit (ASIC) chip; the PP module 20 is responsible for routing, protocol conversion such as Network Address Translation (NAT), Quality of Service (QoS) control and the like.

In some implementations, if the local packet is an ONU service packet, the AP module 30 performs configuration and network management according to configuration information issued by an ONU network manager, so as to implement the ONU service.

The network management is, for example, Customer Premise Equipment Wide Area Network Management Protocol (CWMP) management.

The ONU service is, for example, Voice over Internet Protocol (VoIP) service, including encoding and decoding of VoIP voice, or the like.

In some implementations, if the local packet is a STB service packet, the AP module 30 and the media co-processing module 50 may perform streaming media parsing, audio decoding, subtitle decoding, and the like, in a mode of labor division. The AP module 30 may perform processing on audio data and subtitle data, and the media co-processing module 50 may process streaming media data.

As shown in Fig. 4, the media co-processing module 50 may include: a video codec unit 501 and an image Post Processing Unit (PPU) 502.

The video codec unit 501 is configured to perform encoding and decoding processing on image data.

The image PPU 502 is configured to perform post processing on image frames, including processing such as rotation, scaling, de-interlacing.

As shown in Fig. 5, the audio-video output module 60 may include: a Display Process Controller (DPC) unit 601, a Composite Video Broadcast Signal (CVBS) output unit 602, and a High Definition Multimedia Interface (HDMI) output unit 603.

The DPC unit 601 is configured to control a graphic output layer and a video output layer, and output a multi-layer scaled and combined to the CVBS output unit 602 and/or the HDMI output unit 603.

The CVBS output unit 602 is configured to output a CVBS signal.

The HDMI output unit 603 is configured to output a HDMI signal.

In some implementations, the media output interface includes at least one of a CVBS interface, or an HDMI.

By adopting an integrated device with the integrated SoC described above, only one set of memory and FLASH is to be configured for the SoC, the FLASH may store nonvolatile data such as software mirrors, firmware, configuration data and the like. The memory and FLASH may be accessed by the modules of the SoC via a system bus.

In the embodiment, the integrated device for achieving integration of an ONU and a STB adopts an integrated SoC. The SoC implements parallel isolation processing of the ONU service and the STB service by distinguishing the local packet and the transparently transmitted packet during packet forwarding and performing processing on the ONU service and the STB service simultaneously and respectively by adopting a multi-core processor. Since only one SoC is configured for the integrated device, and only one set of memory and FLASH is to be deployed for the SoC, thereby saving the cost, reducing the power consumption and reducing an occupied area and a volume of the integrated device.

The SoC for achieving integration of an ONU and a STB in the present application is described below by Example 1.

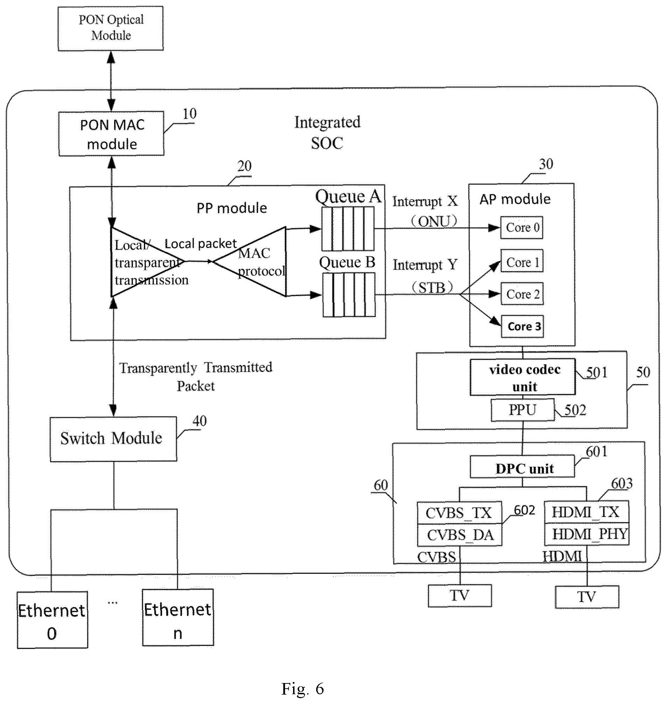

As shown in Fig. 6, the SoC, for achieving integration of the ONU and the STB, includes: a PON MAC module 10, a PP module 20, and an AP module 30, a Switch module 40, a media co-processing module 50 and an audio-video output module 60. The media co-processing module 50 includes: a video codec unit 501 and an image PPU 502. The audio-video output module 60 may include: a DPC unit 601, a CVBS output unit 602, and a HDMI output unit 603.

The CVBS output unit 602 is configured as an analog television output, including a CVBS_TX unit and a CVBS_DA unit, the CVBS_TX unit is a CVBS transmission controller, and the CVBS_DA unit is a digital to analog converter which converts a digital signal into an analog signal. The HDMI output unit 603 is configured as a digital television output, including a HDMI_TX unit and a HDMI PHY unit, the HDMI_TX unit is a HDMI signal transmission controller, and the HDMI_PHY unit is an adapter which sends an HDMI signal to a physical layer.

The PON MAC module 10 is configured to receive a PON data frame from a downlink port of a PON optical module, convert the PON data frame into an Ethernet data frame, and send the Ethernet data frame to the PP module 20; the PON MAC module 10 is further configured to receive the Ethernet data frame sent by the PP module 20, convert the Ethernet data frame into a PON data frame, and send the PON data frame to the downlink port of the PON optical module.

The PON MAC module 10 completes a frame conversion between the PON and the Ethernet. The PON optical module is located outside the SoC, is a module composed of optoelectronic devices, receives an optical signal from the PON through an uplink port, performs photoelectric conversion to generate an electrical signal, and sends the electrical signal to the PON MAC module 10 through the downlink port; the PON optical module receives an electrical signal through the downlink port, performs photoelectric conversion to generate an optical signal, and sends the optical signal to the PON through the uplink port.

The PP module 20 is configured to perform routing, protocol conversion and packet processing on the Ethernet data frame, filter out and send a packet, whose destination MAC address is a MAC address of the SoC, to the AP module 30, and send a packet, whose destination MAC address is not the MAC address of the SoC, to the Switch module 40; the PP module 20 may further perform QoS controlling; and each of destination MAC addresses carried in the ONU service packet and the STB service packet is the MAC address of the SoC.

The Switch module 40, whose uplink port is connected to the PP module 20 and downlink port is connected to one or more Ethernet ports, is configured to implement an Ethernet switching function, after receiving an Ethernet data frame from the uplink port, the Switch module 40 performs switching processing on the Ethernet data frame and sends the Ethernet data frame to a corresponding one of the Ethernet ports through the downlink port; after receiving the Ethernet data frame from the downlink port, the Switch module 40 performs switching processing on the Ethernet data frame and sends the Ethernet data frame to the PP module 20 through the uplink port.

The AP module 30 is configured to perform network management and service implementation for the ONU service packet; and perform encoding and decoding processing for the STB service packet.

The AP module 30 is configured to perform configuration and network management according to configuration information issued by an ONU network manager, so as to implement the ONU service; the network management is, for example, CWMP management. The ONU service is, for example, the VoIP service, including encoding and decoding of VoIP voice, or the like.

The AP module 30 and the media co-processing module 50 may perform streaming media parsing, audio decoding, subtitle decoding, and the like, in a mode of labor division. The AP module 30 may perform processing on audio data and subtitle data, and the media co-processing module 50 may process streaming media data.

The video codec unit 501 is configured to perform encoding and decoding processing on image data.

The video codec unit 501 may support decoding of a plurality of video compression formats such as H.264, H.265, VP9, VP8, VC1, Moving Pictures Experts Group (MPEG) 4, and the like.

The PPU unit 502 is configured to perform image post processing, including processing, such as rotation, scaling, de-interlacing, and the like, on a video image.

The DPC unit 601 is configured to perform processing and controlling on displaying, including controlling a graphic output layer and a video output layer, and outputting a multi-layer scaled and combined to the CVBS output unit 602 and/or the HDMI output unit 603. The graphic output layer is configured to output a User Interface (UI) graphical interface, and the video output layer is configured to output a video image.

The CVBS output unit 602 is configured to output a CVBS signal (i.e., an analogue television signal), and includes a CVBS_TX unit and a CVBS_DA unit, the CVBS_TX unit is a CVBS transmission controller, and the CVBS_DA unit is a digital to analog converter which converts a digital signal into an analog signal.

The HDMI output unit 603 is configured to output a HDMI signal (i.e., a digital television signal), and includes a HDMI_TX unit and a HDMI_PHY unit, the HDMI_TX unit is a HDMI signal transmission controller, and the HDMI_PHY unit is an adapter which sends an HDMI signal to a physical layer.

The integrated SoC of the example integrates functions of the ONU and the STB, and implements isolation processing of two services (the ONU service and the STB service) in the AP module 30. The AP module 30 may adopt a multi-core processor; such as an ARM Coretex-A53 quad-core processor. Because the ONU service has a higher service priority and is constantly online, a process relating to the ONU service may be performed by a core 0 of the quad-core processor, and a process relating to the STB service may be performed by any other core (core 1, core 2, or core 3), and processes are implemented by a software, in an operating system, binding Central Processing Unit (CPU) cores of the respective processes. The STB service may be closed during standby, therefore the STB service may be deployed on the other core, and the other core may be closed to save power consumption.

The PP module 20 may be implemented by using a NP or ASIC chip, and is configured to implement the functions such as routing, protocol conversion (such as NAT conversion), QoS processing, local packet delivery, and the like. The packets forwarded by the PP module 20 are divided into two types: one type of packets to be transparently transmitted to the connected device of the Ethernet port, and the other type of packets including a local packet to be delivered to the AP module 30. If the destination address of the packet is the MAC address of the SoC, the packet is locally delivered to the AP module 30, and if the destination address of the packet is not the MAC address of the SoC, the packet is transparently transmitted to the connected device of the Ethernet port. In a case where the ONU service and the STB service are configured to share a double logic network port, packets are distinguished according to destination MAC addresses thereof and are sent to different queues, if the destination MAC address of the packet is the MAC address corresponding to the ONU service, the packet is sent to a queue A, and if the destination MAC address of the packet is the MAC address corresponding to the STB service, the packet is sent to a queue B. In a case where the ONU service and the STB service is configured to share a single logic network port, packets are distinguished according to protocol types of the packets and are sent to different queues, if the protocol type of the packet is a streaming media protocol, such as RTSP, the packet is sent to the queue B, and if the protocol type of the packet is any other protocol type except the streaming media protocol, the packet is sent to the queue A. The queue A occupies an interrupt X, the queue B occupies an interrupt Y, the interrupt X is configured to be processed in the core 0, and the interrupt Y is configured to be processed in any other core (one or more of the core 1, the core 2 and the core 3). No matter the SoC is configured to share a single logic network port (single MAC) or a double logic network ports (double MAC), it is guaranteed that the streaming media network service of the STB does not affect the ONU service of the core 0.

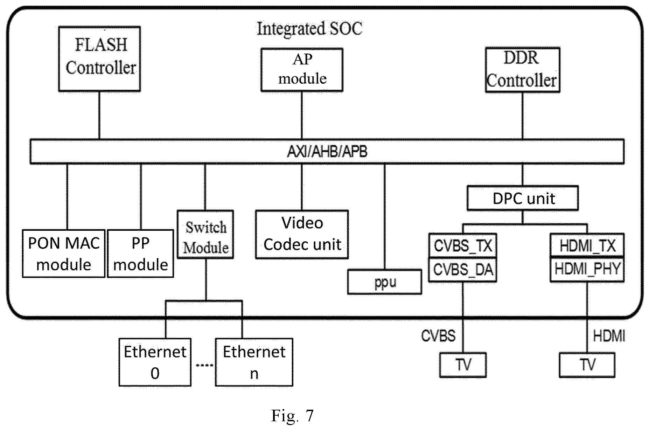

As shown in Fig. 7, the integrated device is further configured with a memory and a FLASH for serving the integrated SoC. The memory may adopt a Double Data Rate Synchronous Dynamic Random-Access Memory (DDR), and the FLASH may adopt an Embedded Multi Media Card (EMMC) or a NAND gate FLASH. The memory and the FLASH may be accessed by the modules of the integrated SoC via a system bus. The system bus may include any of the followings: an Advanced Extensible Interface (AXI), an Advanced High Performance Bus (AHB), or an Advanced Peripheral Bus (APB). The FLASH may store nonvolatile data such as software mirrors, firmware, configuration data or the like.

In the example, the integrated device for achieving integration of the ONU and the STB adopts the integrated SoC, and the SoC implements the parallel isolation processing of the ONU service and the STB service by distinguishing the local packet and the transparently transmitted packet during packet forwarding and performing processing on the ONU service and the STB service simultaneously and respectively by adopting a multi-core processor. Because only one SoC is configured for the integrated device, only one set of memory and FLASH is to be deployed for the SoC, thereby saving the cost, reducing the power consumption and reducing the occupied area and the volume of the integrated device.

## Claims

1. A system on chip for achieving integration of an Optical Network Unit (ONU) and a Set-Top Box (STB), comprising: a Passive Optical Network (PON) Media Access Control (MAC) module, a packet processor module, and an application processor module; wherein,
the PON MAC module is configured to receive a PON data frame, convert the PON data frame into an Ethernet data frame, and send the Ethernet data frame to the packet processor module;
the packet processor module is configured to perform routing processing on the received Ethernet data frame, and send a local packet to the application processor module according to identification information carried in the processed Ethernet data frame; wherein, the local packet comprises: an ONU service packet or a STB service packet; and
the application processor module is configured to perform corresponding processing according to a type of the local packet.

2. The system on chip of claim 1, wherein,
the packet processor module is configured to send the local packet to the application processor module according to the identification information carried in the processed Ethernet data frame by adopting a following way:
in response to that a destination MAC address carried by the Ethernet data frame corresponds to a MAC address of the system on chip, determining that the Ethernet data frame is the local packet; wherein, the system on chip is configured with one MAC address;
distinguishing the ONU service packet and the STB service packet according to information of a protocol type carried by the Ethernet data frame; and
sending the local packet to the application processor module.

3. The system on chip of claim 1, wherein,
the packet processor module is configured to send the local packet to the application processor module according to the identification information carried in the processed Ethernet data frame by adopting a following way:
in response to that a destination MAC address carried by the Ethernet data frame corresponds to a MAC address of the system on chip, determining that the Ethernet data frame is the local packet;
distinguishing the ONU service packet and the STB service packet according to information of the destination MAC address carried by the Ethernet data frame; and
sending the local packet to the application processor module;
wherein, the system on chip is configured with two MAC addresses, one of the two MAC addresses corresponds to the ONU service packet, and the other of the two MAC addresses corresponds to the STB service packet.

4. The system on chip of claim 1or claim 2 or claim 3, wherein,
the packet processor module is configured to send the local packet to the application processor module by adopting a following way:
sending the ONU service packet and the STB service packet to different packet queues, respectively, wherein, each packet queue is processed by at least one processing unit of the application processor module.

5. The system on chip of claim 4, wherein,
the application processor module comprises a plurality of processing units, one of the processing units is configured to process the ONU service packet, and any other of the processing units is configured to process the STB service packet.

6. The system on chip of claim 5, wherein,
the different packet queues have different processing priorities, a processing priority of the ONU service packet is higher than a processing priority of the STB service packet.

7. The system on chip of claim 1, further comprising an Ethernet switch module;
the packet processor module is further configured to send a transparently transmitted packet to the Ethernet switch module according to the identification information carried in the Ethernet data frame; and
the Ethernet switch module is configured to, after receiving the transparently transmitted packet, perform switching and processing on the transparently transmitted packet and send the transparently transmitted packet to a connected device through an Ethernet port.

8. The system on chip of claim 1, further comprising a media co-processing module and an audio-video output module;
the media co-processing module is configured to perform processing on image data of STB service; and
the audio-video output module is configured to output an audio frame data and an image frame data generated by the STB service to a corresponding media output interface.

9. The system on chip of claim 1, wherein,
the application processor module is further configured to send an Ethernet data frame to the packet processor module;
the packet processor module is further configured to send the Ethernet data frame received from the application processor module to the PON MAC module; and
the PON MAC module is further configured to convert the Ethernet data frame sent by the packet processor module into a PON data frame, and send the PON data frame to a PON.

10. The system on chip of claim 7, wherein,
the Ethernet switch module is further configured to send an Ethernet data frame received from the connected device of the Ethernet port to the packet processor module;
the packet processor module is further configured to send the Ethernet data frame received from the Ethernet switch module to the PON MAC module; and
the PON MAC module is further configured to convert the Ethernet data frame sent by the packet processor module into a PON data frame, and send the PON data frame to a PON.
